# EUROPEAN PATENT APPLICATION

(11) **EP 4 671 937 A1**
(43) Date of publication of application: **31.12.2025**
(21) Application number: 24760200.6
(22) Date of filing: 13.02.2024
(51) Int. Cl.: G06F 3/0481, G06F 3/16, G09G 5/00, G09G 5/14, G09G 5/22

(54) **PROGRAM, DISPLAY CONTROL DEVICE, AND CONTROL METHOD**

(30) Priority: 24.02.2023 JP 2023027795
(71) Applicant: KYOCERA Document Solutions Inc., Osaka-shi, Osaka 540-8585 (JP)
(72) Inventor: OMORI, Tadashi, Kyoto-shi, Kyoto 612-8501 (JP)
(74) Representative: Viering, Jentschura & Partner mbB Patent- und Rechtsanwälte
(86) International application number: PCT/JP2024/004880
(87) International publication number: WO 2024/176898

(57) **Abstract**

A program causes a display control apparatus to perform a process. The process includes obtaining text information obtained through conversion based on speech recognition, operating in a first display mode, in which an image associated with a keyword included in the text information is displayed on a display located between a first user and a second user, switching from the first display mode to a second display mode if a first condition is satisfied in the first display mode, and displaying, in the second display mode, the image on the display in a display manner different from a display manner in the first display mode.

## Description

### CROSS-REFERENCE TO RELATED APPLICATIONS

The present application claims priority to Japanese Patent Application No. 2023-027795 filed in the Japan Patent Office on February 24, 2023, the entire contents of which are incorporated herein by reference.

### TECHNICAL FIELD

The present disclosure relates to a program, a display control apparatus, and a control method.

### BACKGROUND OF INVENTION

Techniques for displaying images on a display are conventionally known (e.g., Patent Literature 1). A display apparatus described in Patent Literature 1 displays a plurality of images in different display regions, detects a user operation on the display regions of the images, and changes the display regions and a display state of the images in accordance with the detected user operation.

### CITATION LIST

### PATENT LITERATURE

Patent Literature 1: International Publication No. 2018/025339

### SUMMARY

In an embodiment of the present disclosure, a program causes a display control apparatus to perform a process. The process includes obtaining text information obtained through conversion based on speech recognition, operating in a first display mode, in which an image associated with a keyword included in the text information is displayed on a display located between a first user and a second user, switching from the first display mode to a second display mode if a first condition is satisfied in the first display mode, and displaying, in the second display mode, the image on the display in a display manner different from a display manner in the first display mode.

In an embodiment of the present disclosure, a display control apparatus includes a controller. The controller obtains text information obtained through conversion based on speech recognition, that operates in a first display mode, in which an image associated with a keyword included in the text information is displayed on a display located between a first user and a second user, and that switches from the first display mode to a second display mode if a first condition is satisfied in the first display mode. The controller displays, in the second display mode, the image on the display in a display manner different from a display manner in the first display mode.

In an embodiment of the present disclosure, a control method includes obtaining text information obtained through conversion based on speech recognition, operating in a first display mode, in which an image associated with a keyword included in the text information is displayed on a display located between a first user and a second user, switching from the first display mode to a second display mode if a first condition is satisfied in the first display mode, and displaying, in the second display mode, the image on the display in a display manner different from a display manner in the first display mode.

### BRIEF DESCRIPTION OF THE DRAWINGS

FIG. 1 is a diagram illustrating a schematic configuration of a display system according to an embodiment of the present disclosure.
FIG. 2 is a block diagram of the display system illustrated in FIG. 1.
FIG. 3 is a diagram illustrating a configuration of a first display region and a second display region when viewed from a first user.
FIG. 4 is a diagram illustrating a configuration of the first display region and the second display region when viewed from a second user.
FIG. 5 is a diagram illustrating the first display region initialized in a second display mode.
FIG. 6 is a diagram illustrating a display example of the first display region in the second display mode.
FIG. 7 is a diagram illustrating another display example of the first display region in the second display mode.
FIG. 8 is a diagram illustrating a display example of the first display region in another example of the second display mode.
FIG. 9 is a diagram illustrating another display example of the first display region in the other example of the second display mode.
FIG. 10 is a flowchart illustrating a procedure of a control process in a first display mode.
FIG. 11 is a flowchart illustrating a procedure of a control process in the second display mode.
FIG. 12 is another flowchart illustrating the procedure of the control process in the second display mode.
FIG. 13 is a flowchart illustrating a procedure of a control process in the other example of the second display mode.
FIG. 14 is another flowchart illustrating the procedure of the control process in the other example of the second display mode.
FIG. 15 is a flowchart illustrating a procedure of a process for removing an image.
FIG. 16 is a flowchart illustrating a procedure of a process for switching to the first display mode.

### DESCRIPTION OF EMBODIMENTS

The conventional technique for displaying images on a display has room for improvement. According to an embodiment of the present disclosure, the technique for displaying images on a display can be improved.

In the present disclosure, a "vertical direction of an image" and a "horizontal direction of an image" may be set in accordance with content of the image. For example, the vertical direction of an image may be a direction recognized by a user as a top-and-bottom direction of the image on the basis of content of the image. The horizontal direction of an image may be a direction recognized by the user as a left-and-right direction on the basis of content of the image. An "aspect ratio of an image" is a ratio of a size of the image in the vertical direction and a size of the image in the horizontal direction.

An embodiment of the present disclosure will be described hereinafter with reference to the drawings.

### (Configuration of Display System)

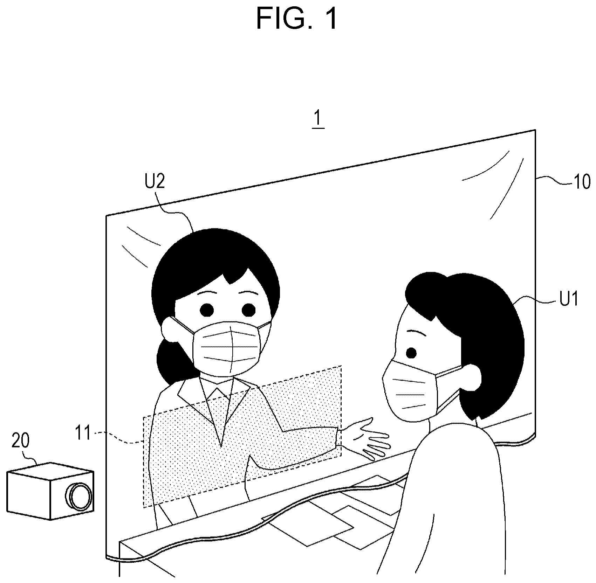

A display system 1 according to the present embodiment illustrated in FIG. 1 is used at a counter. The counter at which the display system 1 is used is, for example, a counter at a public institution such as a government or municipal office, a counter at a financial institution, a counter at a medical facility, or a counter at a public transportation provider. The display system 1, however, may be used at a location other than a counter. For example, the display system 1 may be used at a sales outlet or a meeting room within an office of a private business or the like.

The display system 1 can facilitate communication between a first user U1 and a second user U2. The first user U1 is a visitor who is visiting the counter. The first user U1 is, for example, a deaf person. The second user U2 is a person in charge at the counter. At such a counter, the first user U1 and the second user U2 face each other.

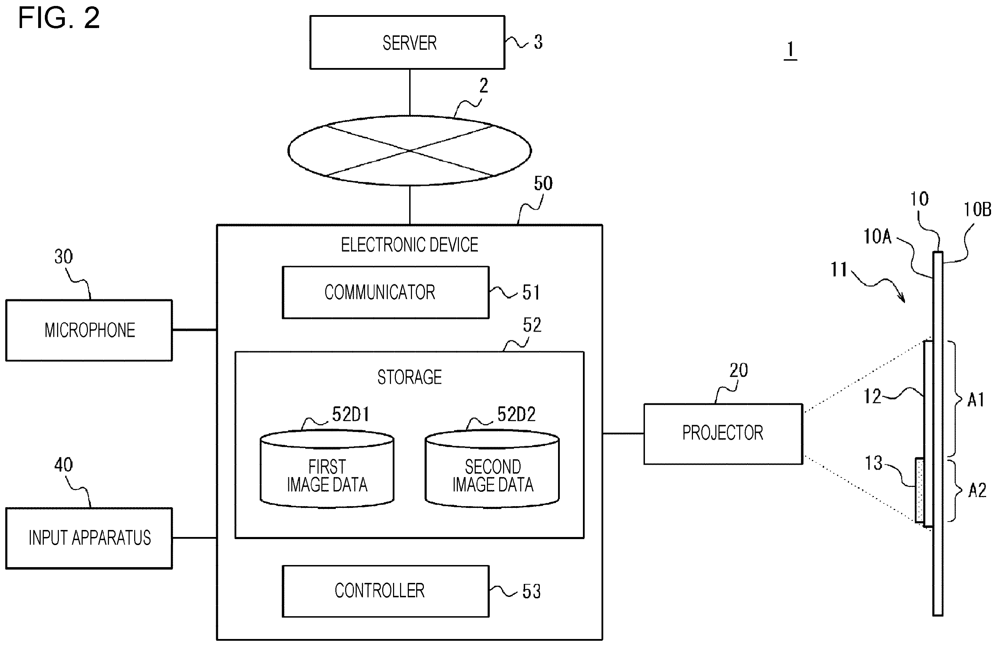

As illustrated in FIG. 1, the display system 1 includes a base 10 and a projector 20. As illustrated in FIG. 2, the display system 1 includes a microphone 30, an input apparatus 40, and an electronic device 50. The electronic device 50 is a display control apparatus in the display system 1. The projector 20, the microphone 30, the input apparatus 40, and the electronic device 50 can communicate with one another via communication links. The communication links include, for example, wired ones or wireless ones. The projector 20, the microphone 30, the input apparatus 40, and the electronic device 50 may be configured as a single apparatus, instead.

As illustrated in FIG. 1, the base 10 is located between the first user U1 and the second user U2. The base 10 includes, for example, a transparent member. Length of the base 10 in the vertical direction may be a length larger than or equal to an average length of a human upper body. Length of the base 10 in the horizontal direction may be several times as large as an average breadth of human shoulders. During these years, in order to prevent infectious diseases, a vinyl curtain, an acrylic panel, or the like is sometimes installed between a visitor, such as the first user U1, and a person in charge of a counter, such as the second user U2, as a measure against airborne droplets. Such a vinyl curtain or an acrylic panel may be used as the base 10.

As illustrated in FIG. 2, the base 10 has surfaces 10A and 10B. When the base 10 is located between the first user U1 and the second user U2, the first user U1 is located on a surface 10B side. The second user U2 is located on a surface 10A side. The base 10 includes a transparent screen 11.

As illustrated in FIG. 2, the transparent screen 11 is disposed on the surface 10A side among the surfaces 10A and 10B of the base 10. As described later, the projector 20 projects what the second user has spoken and the like onto the transparent screen 11. By projecting what the second user has spoken and the like onto the transparent screen 11, the first user U1, who is a deaf person, can read and understand what the second user U2 has spoken projected onto the transparent screen 11.

The transparent screen 11 may be disposed at any position on the base 10. In an example, when the base 10 is located between the first user U1 and the second user U2, the transparent screen 11 may be disposed at a position on the base 10 at which the transparent screen 11 does not obstruct the first user U1 and the second user U2 from visually recognizing each other's faces. In this case, the transparent screen 11 may be disposed at a position lower than the center of the base 10. Size of the transparent screen 11 may be set on the basis of the amount of information to be projected onto the transparent screen 11.

As illustrated in FIG. 2, the transparent screen 11 includes a screen section 12 and a light-blocking section 13. The screen section 12 is disposed on the surface 10A of the base 10. The light-blocking section 13 is disposed on the screen section 12.

The screen section 12 is a projector screen. The screen section 12 includes, for example, a film-like, sheet-like, or plate-like transparent member attachable to the base 10. The screen section 12 itself is sometimes called a "transparent screen". Projection light from the projector 20 is incident on the screen section 12. The screen section 12 diffuses a part of the incident projection light on each of an incident side and an emitting side of the projection light. The first user U1 and the second user U2 can recognize an image projected by the projector 20 when seeing the projection light diffused by the screen section 12.

The screen section 12 has, for example, a rectangular shape. The shape of the screen section 12, however, is not limited to a rectangle. The screen section 12 may have any shape.

The light-blocking section 13 blocks at least a part of the projection light emitted from the projector 20. In the present embodiment, the light-blocking section 13 blocks transmission light of predetermined wavelengths in the projection light emitted from the projector 20. The light-blocking section 13 includes, for example, a dichroic film that blocks the light of the predetermined wavelengths. For example, the light-blocking section 13 includes a dichroic film that blocks red light.

The light-blocking section 13 may partly overlap the screen section 12. For example, the light-blocking section 13 is disposed in such a way as to overlap a surface of the screen section 12. As illustrated in FIG. 2, the light-blocking section 13 may be disposed at a position lower than the center of the surface of the screen section 12.

The light-blocking section 13 has, for example, a rectangular shape. The shape of the light-blocking section 13, however, is not limited to a rectangle. The light-blocking section 13 may have any shape.

The screen section 12 is a display of the display system 1. As illustrated in FIG. 2, regions of the screen section 12 include a first display region A1 and a second display region A2.

The first display region A1 is a region of the screen section 12 that does not overlap the light-blocking section 13. The projector 20 radiates projection light of a text, an image, or the like in the first display region A1. Since the first display region A1 is a region of the screen section 12 that does not overlap the light-blocking section 13, both the first user U1 and the second user U2 can visually recognize the text, the image, or the like projected in the first display region A1. In the present embodiment, the first display region A1 is used by the first user U1 to see what the second user U2 has spoken and the like.

The second display region A2 is a region in which the screen section 12 and the light-blocking section 13 overlap. As described later, the projector 20 radiates, in the second display region A2, projection light of the predetermined wavelengths blocked by the light-blocking section 13. At this time, the first user U1 cannot visually recognize a text or the like projected in the second display region A2. The second user U2, however, can visually recognize the text or the like projected in the second display region A2. In the present embodiment, the second display region A2 is used by the second user U2 to see what he/she has spoken.

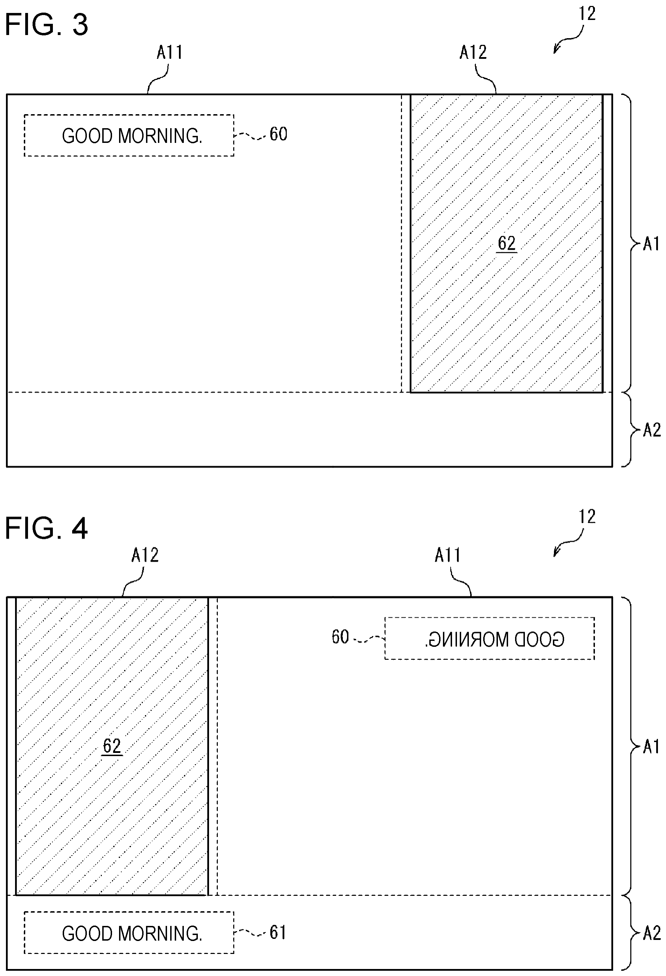

As illustrated in FIG. 3, which will be referred to later, the second display region A2 may be located at a position lower than the first display region A1. Size of the first display region A1 and size of the second display region A2 may be set on the basis of the amount of information to be displayed in the first display region A1 and the second display region A2, respectively. In an example, 4/5 of the screen section 12 may be the first display region A1. 1/5 of the screen section 12 may be the second display region A2.

Operation modes of the display system 1 include a first display mode and a second display mode.

The first display mode is a mode in which both text and images can be displayed in the first display region A1. In the first display mode, the first display region A1 includes a first region A11 and a second region A12 as illustrated in FIG. 3, which will be described later. Text is displayed in the first region A11. Images are displayed in the second region A12. Size of the first region A11 and size of the second region A12 in the first display region A1 may be set on the basis of the amount of text and images to be displayed in the first display region A1. In an example, 2/3 of the first display region A1 may be the first region A11. 1/3 of the first display region A1 may be the second region A12.

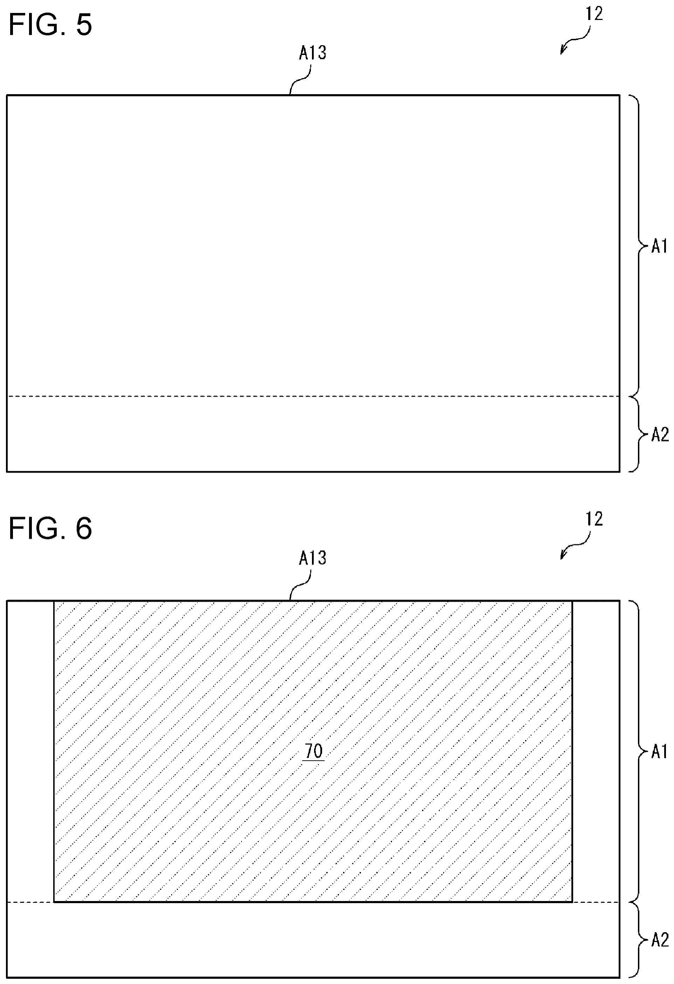

The second display mode is a mode in which images are displayed in a display manner different from that in the first display mode. In the present embodiment, the second display mode is a mode in which more images or a larger image than in the first display mode can be displayed. In the second display mode, the first display region A1 includes a third region A13 as illustrated in FIGs 5 to 7, which will be referred to later. Images are displayed in the third region A13. In FIGs. 5 to 7, which will be described later, size of the third region A13 is the same as that of the first display region A1. The size of the third region A13, however, may be smaller than that of the first display region A1.

As illustrated in FIG. 2, the projector 20 is disposed on the surface 10A side among the surfaces 10A and 10B of the base 10 as illustrated in FIG. 2. As illustrated in FIG. 1, the projector 20 is disposed, for example, on a second user U2 side of the base 10.

The projector 20 radiates projection light onto the screen section 12 under the control of the electronic device 50. The projector 20 projects a text, an image, or the like onto the screen section 12 by radiating projection light onto the screen section 12.

The microphone 30 is disposed on the surface 10A side among the surfaces 10A and 10B of the base 10 as illustrated in FIG. 2. For example, the microphone 30 is disposed on the second user U2 side of the base 10 illustrated in FIG. 1. In an example, the microphone 30 may be disposed on a desk in front of the second user U2. When the second user U2 wears a headset, the microphone 30 may be attached to the headset.

The microphone 30 collects sound. The sound collected by the microphone 30 can include what the second user U2 has spoken. The microphone 30 transmits data regarding the collected sound to the electronic device 50.

As illustrated in FIG. 2, the input apparatus 40 is disposed on the surface 10A side among the surfaces 10A and 10B of the base 10. For example, the input apparatus 40 is disposed on the second user U2 side of the base 10 illustrated in FIG. 1. In an example, the input apparatus 40 may be disposed on the desk in front of the second user U2 illustrated in FIG. 1.

The input apparatus 40 includes a keyboard, a numeric keypad, or the like. The input apparatus 40 receives an input from the second user U2. The input apparatus 40 transmits data regarding the received input to the electronic device 50.

The electronic device 50 is, for example, a smartphone, a tablet terminal, or the like. The electronic device 50 can communicate with a server 3 via a network 2. The network 2 may be any of networks including a mobile communication network and the Internet. The server 3 is, for example, a cloud server. The server 3 can perform speech recognition.

The server 3 is a server accessible via the network 2. The server 3 according to the present embodiment is a speech recognition server that provides a speech recognition service. The speech recognition service is a service that converts a speech sound into text information. The server 3 according to the present embodiment receives data regarding a speech sound and performs speech recognition processing on the received data regarding a speech sound. The speech recognition processing is processing for converting data regarding a speech sound into text information. The server 3 converts the received data regarding a speech sound into text information by performing the speech recognition processing. The server 3 transmits the text information obtained through the conversion to a source of the data regarding a speech sound. The server 3 provides the speech recognition service as a free or paid service.

As illustrated in FIG. 2, the electronic device 50 includes a communicator 51, a storage 52, and a controller 53.

The communicator 51 includes at least one communication module connectable to the network 2. The communication module is, for example, a communication module compatible with a mobile communication standard such as LTE (Long Term Evolution), 4G (4th Generation), or 5G (5th Generation).

The communicator 51 includes at least one communication module communicable with the projector 20 via a communication link. The communication module is a communication module compatible with a standard of the communication link between the electronic device 50 and the projector 20. The standard of the communication link is a short-range wireless communication standard such as Miracast.

The communicator 51 includes at least one communication module communicable with the microphone 30 via a communication link. The communication module is a communication module compatible with a standard of the communication link between the electronic device 50 and the microphone 30. The standard of the communication link is a wired communication standard such as a CTIA (Cellular Telephone Industry Association) standard or an OMTP (Open Mobile Terminal Platform) standard.

The communicator 51 includes at least one communication module communicable with the input apparatus 40 via a communication link. The communication module is a communication module compatible with a standard of the communication link between the electronic device 50 and the input apparatus 40. The standard of the communication link is, for example, a short-range wireless communication standard such as Bluetooth (registered trademark).

The communicator 51 may include at least one communication module communicable with an IC card. The communication module is a communication module compatible with a short-range wireless communication standard such as NFC (near field communication) or RFID (Radio Frequency Identifier). This communication module is disposed on a desk in front of the first user U1 illustrated in FIG. 1.

The storage 52 includes at least one semiconductor memory, at least one magnetic memory, at least one optical memory, or a combination of at least two of these. The semiconductor memory is, for example, a RAM (Random Access Memory), a ROM (Read Only Memory), or the like. The RAM is, for example, an SRAM (Static Random Access Memory), a DRAM (Dynamic Random Access Memory), or the like. The ROM is, for example, an EEPROM (Electrically Erasable Programmable Read Only Memory) or the like. The storage 52 may function as a main storage device, an auxiliary storage device, or a cache memory. The storage 52 stores data to be used for operation of the electronic device 50 and data obtained as a result of the operation of the electronic device 50. For example, the storage 52 stores a system program, an application program, embedded software, and the like.

The storage 52 includes a first database 52D1 and a second database 52D2.

Data regarding first images is saved in the first database 52D1. The first images may be still images or moving images. The first images are associated with first keywords. Different first images may be associated with different first keywords. Size of each first image in the vertical direction is larger than size of the first image in the horizontal direction. That is, the first images are so-called vertically long images. An aspect ratio of the first images may be set in accordance with size of the second region A12 or the like. For example, a ratio of the size of each first image in the vertical direction to the size in the horizontal direction is 3:2. The first images are used in both the first display mode and the second display mode.

Data regarding second images is saved in the second database 52D2. The second images may be still images or moving images. The second images are associated with second keywords. Different second images may be associated with different second images. A subset or all of a plurality of second keywords may be the same as or different from a subset or all of a plurality of first keywords. Size of each second image in the horizontal direction is larger than size of the second image in the vertical direction. That is, the second images are so-called horizontally long images. An aspect ratio of the second images may be set in accordance with the size of the first display region A1 or the like. For example, a ratio of the size of each second image in the vertical direction to the size in the horizontal direction is 2:3. The second images are used in the second display mode. The amount of information included in each second image may be larger than the amount of information included in each first image. Each second image is, for example, a map or the like.

The controller 53 includes at least one processor, at least one dedicated circuit, or a combination of these. The processor is a general-purpose processor such as a CPU (Central Processing Unit) or a GPU (Graphics Processing Unit) or a dedicated processor specialized in specific processing. The dedicated circuit is, for example, an FPGA (Field-Programmable Gate Array), an ASIC (Application Specific Integrated Circuit), or the like. The controller 53 performs processing relating to the operation of the electronic device 50 while controlling each component of the electronic device 50.

### <Processing in First Display Mode>

In an initial state, the controller 53 operates in the first display mode. For example, the electronic device 50 enters the initial state immediately after the application program for executing the display system 1 is activated. In the first display mode, the controller 53 performs processing for obtaining text information described hereinafter.

### <<Processing for Obtaining Text Information>>

The controller 53 receives, from the microphone 30, data regarding a speech sound collected by the microphone 30 using the communicator 51. The received data regarding a speech sound can include data regarding what the second user U2 has spoken. The controller 53 transmits the received data regarding a speech sound to the server 3 via the network 2 using the communicator 51. Upon receiving the data regarding a speech sound from the electronic device 50, the server 3 performs the speech recognition processing on the received data regarding a speech sound. After converting the data regarding a speech sound into the text information, the server 3 transmits the text information obtained through the conversion to the electronic device 50 via the network 2.

The controller 53 receives the text information obtained through the conversion based on the speech recognition from the server 3 via the network 2 using the communicator 51. In the present embodiment, the controller 53 obtains the text information obtained through the conversion based on the speech recognition by receiving the text information from the server 3.

### <<Processing for Generating First Text Information and Second Text Information>>

Upon receiving the text information from the server 3, the controller 53 generates first text information and second text information on the basis of the text information received from the server 3.

The first text information is text information to be displayed in the first region A11 of the first display region A1. The controller 53 generates the first text information such that a character string included in the text information is displayed in the first region A11 in a correct orientation when viewed from the first user U1. The "correct orientation" in the present disclosure means a state where a text or the like is displayed correctly to a user in terms of the horizontal direction. The "correct orientation" is used in comparison with a state where a text or the like is horizontally flipped. Here, a direction in the first display region A1 in which the character string of the first text information is arranged depends on a language, a display manner of sentences in the first region A11, and the like. In an example, the received text information is text information in Japanese. As illustrated in FIG. 3, which will be referred to later, sentences are assumed to be displayed horizontally in the first region A11. When written horizontally, Japanese sentences are read from left to right. The controller 53, therefore, generates the first text information such that the character string included in the received text information is arranged from left to right when viewed from the first user U1 like first text information 60 illustrated in FIG. 3, which will be referred to later. The controller 53 may generate the first text information such that the character string included in the text information becomes readable when viewed from the first user U1.

The second text information is text information to be displayed in the second display region A2. The controller 53 generates, as with or similarly to the first text information, the second text information such that a character string included in the text information is displayed in the second display region A2 in a correct orientation when viewed from the second user U2 like second text information 61 illustrated in FIG. 4, which will be referred to later. That is, when viewed from the second user U2, the second text information displayed in the second display region A2 and the first text information displayed in the first display region A1 may be in a horizontally flipped relationship. The controller 53 may generate the second text information such that the character string included in the text information becomes readable when viewed from the second user U2.

### <<Processing for Displaying First Text Information and Second Text Information>>

After generating the first text information and the second text information, the controller 53 performs processing for displaying the first text information and the second text information. The display processing is processing for displaying the first text information in the first region A11 and the second text information in the second display region A2.

As for the display of the first text information, the controller 53 transmits a control signal to the projector 20 using the communicator 51 to cause the projector 20 to radiate projection light of the first text information in the first region A11. A wavelength of the projection light of the first text information may be set in consideration of visibility of the text or the like in the first region A11. The controller 53 displays the first text information in the first region A11 by radiating the projection light of the first text information in the first region A11.

As for the display of the second text information, the controller 53 transmits a control signal to the projector 20 using the communicator 51 to cause the projector 20 to radiate projection light of the second text information in the second display region A2. The projection light of the second text information is light with a predetermined wavelength blocked by the light-blocking section 13. When the light-blocking section 13 includes a dichroic film that blocks red light, for example, the projection light of the second text information has a wavelength of red light. The controller 53 displays the second text information in the second display region A2 by causing the projector 20 to radiate the projection light of the second text information in the second display region A2.

For example, FIG. 3 illustrates a configuration in which the first display region A1 and the second display region A2 are viewed from the first user U1. FIG. 4 illustrates a configuration in which the first display region A1 and the second display region A2 are viewed from the second user U2. In FIGs. 3 and 4, the controller 53 receives text information, "Good morning", from the server 3. In this case, the controller 53 generates the first text information 60 such that a character string, "Good morning", is arranged from left to right when viewed from the first user U1 as illustrated in FIG. 3. The controller 53 also generates the second text information 61 such that a character string, "Good morning", is arranged from left to right when viewed from the second user U2 as illustrated in FIG. 4. As described above, the projection light of the second text information 61 is light with the predetermined wavelength blocked by the light-blocking section 13. As illustrated in FIG. 3, therefore, the first user U1 cannot visually recognize the text, "Good morning", projected in the second display region A2.

### <<Processing for Displaying First Image>>

Upon receiving the text information from the server 3, the controller 53 performs displaying processing for displaying a first image in the first display region A1.

First, the controller 53 receives text information from the server 3, and determines whether the received text information includes a first keyword by referring to the first database 52D1. If determining that the received text information includes a first keyword, the controller 53 obtains data regarding a first image associated with the first keyword from the first database 52D1.

Upon obtaining the data regarding the first image from the first database 52D1, the controller 53 displays the obtained data regarding the first image in the second region A12. In an example of this processing, the controller 53 causes the projector 20 to radiate projection light of the first image in the second region A12 by transmitting a control signal to the projector 20 using the communicator 51. A wavelength of the projection light of the first image may be set in consideration of visibility of the image in the second region A12. The controller 53 displays the first image in the second region A12 by causing the projector 20 to radiate the projection light of the first image in the second region A12. For example, with the configuration illustrated in FIGs. 3 and 4, a first image 62 is displayed in the second region A12.

### <Processing for Switching to Second Display Mode>

If a first condition is satisfied in the first display mode, the controller 53 switches the operation mode of the display system 1 from the first display mode to the second display mode. The first condition is a condition for switching the operation mode of the display system 1 from the first display mode to the second display mode. The first condition may be set in consideration of convenience for the user.

In an example, the first condition may be a condition that a predetermined input has been received. The predetermined input is, for example, an input of an instruction to switch to the second display mode. For example, the second user U2 might desire to display an image with a large amount of information, such as a map, in the first display region A1. In this case, the second user U2 may input, to the input apparatus 40, an instruction to switch to the second display mode. Upon receiving the input instruction to switch to the second display mode, the input apparatus 40 may transmit, to the electronic device 50, data regarding the received instruction to switch to the second display mode. The controller 53 may receive the input instruction to switch to the second display mode by receiving, from the input apparatus 40, the data regarding the input instruction to switch to the second display mode using the communicator 51. Upon receiving the input instruction to switch to the second display mode, the controller 53 switches the operation of the display system 1 from the first display mode to the second display mode. Here, the controller 53 may receive the predetermined input using the microphone 30. That is, the predetermined input may be an input based on a speech sound.

In another example, the first condition may be a condition that status information regarding the first user U1 indicates a desire to use the second display mode. For example, the first user U1 might desire to receive an explanation from the second user U2 using only images. In this case, the first user U1 may write, in an IC card owned thereby in advance, information indicating a desire to use the second display mode. The IC card may be issued by a public institution that uses the display system 1 at the counter. For example, the first user U1 holds the IC card over the communication module of the communicator 51 before starting to communicate with the second user U2. When the IC card is held over the communication module of the communicator 51, the controller 53 performs short-range wireless communication with the IC card of the first user U1 using the communicator 51. By performing the short-range wireless communication with the IC card of the first user U1 using the communicator 51, the controller 53 obtains the information indicating a desire to use the second display mode written in the IC card as the status information regarding the first user U1. Upon obtaining the information indicating a desire to use the second display mode written in the IC card, the controller 53 switches the operation mode of the display system 1 from the first display mode to the second display mode.

### <Processing in Second Display Mode>

When switching to the second display mode, the controller 53 determines whether the first condition has been satisfied when a first image is displayed in the second region A12.

If determining, upon switching to the second display mode, that the first condition has been satisfied when a first image is not displayed in the second region A12, the controller 53 initializes the first display region A1. As illustrated in FIG. 5, for example, the controller 53 initializes the first display region A1 by removing the first text information 60 illustrated in FIG. 3 from the first region A11. The configuration illustrated in FIG. 5 is a configuration where the first display region A1 and the second display region A2 are viewed from the first user U1.

If determining, upon switching to the second display mode, that the first condition has been satisfied when a first image is displayed in the second region A12, the controller 53 determines whether a second image associated with a second keyword that is the same as the first keyword associated with the displayed first image is saved. The controller 53 refers to the second database 52D2, and determines whether a second image associated with a second keyword that is the same as the first keyword associated with the displayed first image is saved.

If determining that a second image associated with a second keyword that is the same as the first keyword associated with the first image displayed in the second region A12 is saved, the controller 53 obtains data regarding the second image from the second database 52D2. Upon obtaining the data regarding the second image, the controller 53 removes the first image displayed in the second region A12 and displays the obtained second image in the third region A13. As illustrated in FIG. 6, for example, the controller 53 displays the server 70 in the third region A13.

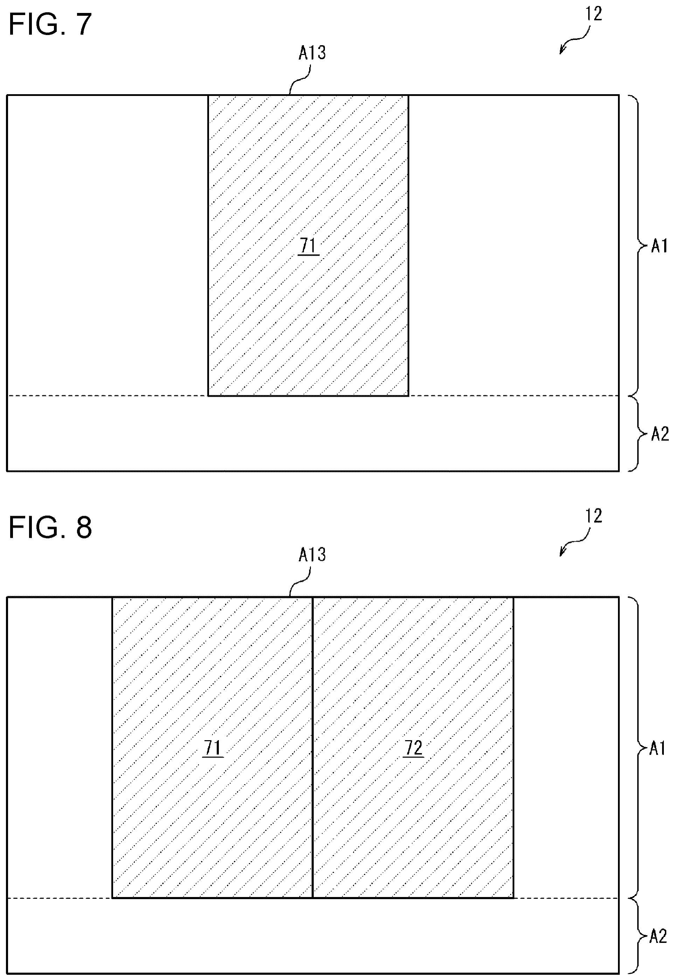

If determining that a second image associated with a second keyword that is the same as the first keyword associated with the first image displayed in the second region A12 is not saved, the controller 53 displays the first image displayed in the second region A12 in the third region A13. As illustrated in FIG. 7, for example, the controller 53 displays the first image 71 in the third region A13. The controller 53 displays the first image 71 at the center of the third region A13. The controller 53, however, may display the first image 71 at any position other than the center of the third region A13.

In the second display mode, as with or similarly to the first display mode, the controller 53 performs the processing for obtaining text information. In the second mode, when the controller 53 newly receives text information from the server 3, the controller 53 refers to the second database 52D2, and determines whether the newly received text information includes a second keyword. If determining that the newly received text information includes a second keyword, the controller 53 obtains, from the second database 52D2, data regarding a new second image associated with the second keyword. The controller 53 preferentially displays the new second image in the third region A13 of the first display region A1. In the present embodiment, when preferentially displaying the new second image in the third region A13, the controller 53 removes the first image or the second image displayed in the third region A13 of the first display region A1 and displays the new second image in the third region A13. The preferential display of the new second image in the third region A13, however, is not limited to this. In another example, the controller 53 may display the new second image such that the new second image overlaps a part of the displayed first image or second image.

### <Another Example of Second Display Mode>

In another example of the second display mode, if the text information newly received from the server 3 does not include a second keyword but includes a first keyword, the controller 53 may obtain data regarding a new first image associated with the first keyword from the first database 52D1. The controller 53 may display the data regarding the new first image in the third region A13 of the first display region A1.

Here, before displaying the new first image in the third region A13, the controller 53 may determine whether the third region A13 includes a blank space. The blank space is a space where the first image can be displayed. The controller 53 may determine whether the third region A13 includes a blank space by calculating in advance a maximum value of the number of first images that can be displayed in the third region A13. The controller 53 may calculate the maximum value of the number of first images that can be displayed in the third region A13 on the basis of the aspect ratio of first images and the size of the third region A13 in the horizontal direction and the size in the vertical direction.

If determining, before displaying the new first image in the third region A13, that the third region A13 includes a blank space, the controller 53 displays the new first image in the third region A13 along with a displayed first image. With the configuration illustrated in FIG. 7, for example, the controller 53 determines that the third region A13 includes a blank space. In this case, as illustrated in FIG. 8, the controller 53 displays a new first image 72 along with the displayed first image 71. The controller 53 may display first images in the third region A13 in chronological order from left to right. The controller 53 may display a plurality of first images around the center of the first display region A1. The controller 53, however, may display displayed first images and a new first image, that is, the plurality of first images, at any positions in the third region A13.

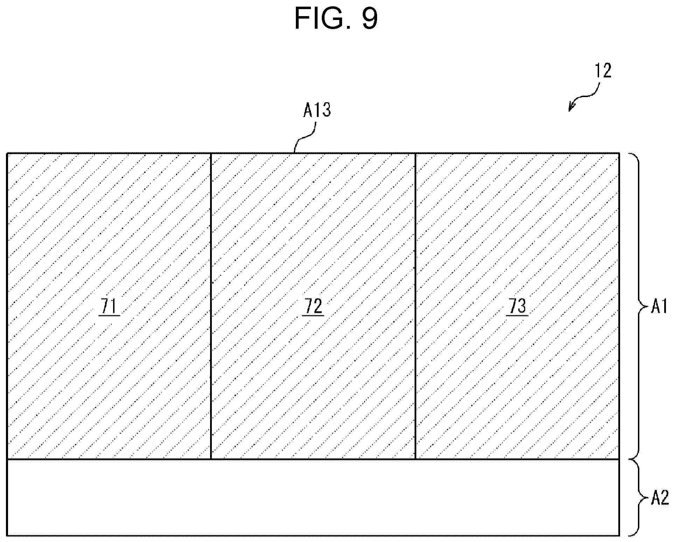

If determining, before displaying the new first image in the third region A13, that the third region A13 does not include a blank space, the controller 53 removes one of displayed first images and displays the new first image in the third region A13. The controller 53 may remove an image displayed the longest time ago among the displayed first images. With a configuration illustrated in FIG. 9, for example, the controller 53 determines that the third region A13 does not include a blank space. Among a first image 71, a first image 72, and a first image 73 displayed in the third region A13, the first image 71 is the image displayed the longest time ago. With the configuration illustrated in FIG. 9, the controller 53 removes the first image 71 among the displayed first images 71 to 73 and displays the new first image in the third region A13.

### <Processing for Removing Image>

The second user U2 may input an instruction to remove an image to the input apparatus 40 in the first display mode or the second display mode. The instruction to remove an image is an input indicating removal of a first image or a second image displayed in the first display region A1. The instruction to remove an image may specify an image to be removed from the first display region A1. Upon receiving the input instruction to remove an image, the input apparatus 40 may transmit data regarding the input instruction to remove an image to the electronic device 50.

The controller 53 may receive the input instruction to remove an image from the second user U2 by receiving data regarding the input instruction to remove an image from the input apparatus 40 using the communicator 51. Upon receiving the input instruction to remove an image, the controller 53 may remove an image from the first display region A1 in accordance with the input.

### <Processing for Switching to First Display Mode>

If a second condition is satisfied in the second display mode, the controller 53 switches the operation mode of the display system 1 from the second display mode to the first display mode. The second condition is a condition for switching the operation mode of the display system 1 from the second display mode to the first display mode. The second condition may be set in consideration of convenience for the user.

In an example, the second condition may be a condition that a predetermined input has been received. The predetermined input is, for example, an input of an instruction to switch to the first display mode. For example, the second user U2 might desire to return the operation mode of the display system 1 to the first display mode after providing an explanation for the first user U1 using the second display mode. In this case, the second user U2 may input, to the input apparatus 40, the instruction to switch to the first display mode. Upon receiving the input instruction to switch to the first display mode, the input apparatus 40 may transmit, to the electronic device 50, data regarding the received instruction to switch to the first display mode. The controller 53 may receive the input instruction to switch to the first display mode by receiving, from the input apparatus 40, the data regarding the input instruction to switch to the first display mode using the communicator 51. Upon receiving the input instruction to switch to the first display mode, the controller 53 switches the operation mode of the display system 1 from the second display mode to the first display mode. Here, as with or similar to the first condition, the controller 53 may receive the predetermined input using the microphone 30.

In another example, the second condition may be a condition that the status information regarding the first user U1 does not indicate a desire to use the second display mode. The first user U1 might not particularly desire to use the second display mode. In this case, the first user U1 need not write, in the IC card owned thereby in advance, the above-described information indicating a desire to use the second display mode. As described above, for example, the first user U1 holds the IC card over the communication module of the communicator 51 before starting to communicate with the second user U2. The controller 53 performs, as described above, short-distance wireless communication with the IC card of the first user U1 to detect that the information indicating a desire to use the second display mode is not written in the IC card. If detecting that the information indicating a desire to use the second display mode is not written in the IC card, the controller 53 may determine that the condition that the status information regarding the first user U1 does not indicate a desire to use the second display mode has been satisfied. That is, if detecting that the information indicating a desire to use the second display mode is not written in the IC card of the first user U1, the controller 53 may switch the operation mode of the display system 1 from the second display mode to the second display mode. Here, the second user U2 might unintentionally leave the operation mode of the display system 1 in the second display mode after providing an explanation for a visitor before the first user U1 in the second display mode. Even when the second user U2 unintentionally leaves the operation mode of the display system 1 in the second display mode like this, the operation mode of the display system 1 can be switched to the first display mode in accordance with the status information regarding the first user U1.

### (Operation in First Display Mode)

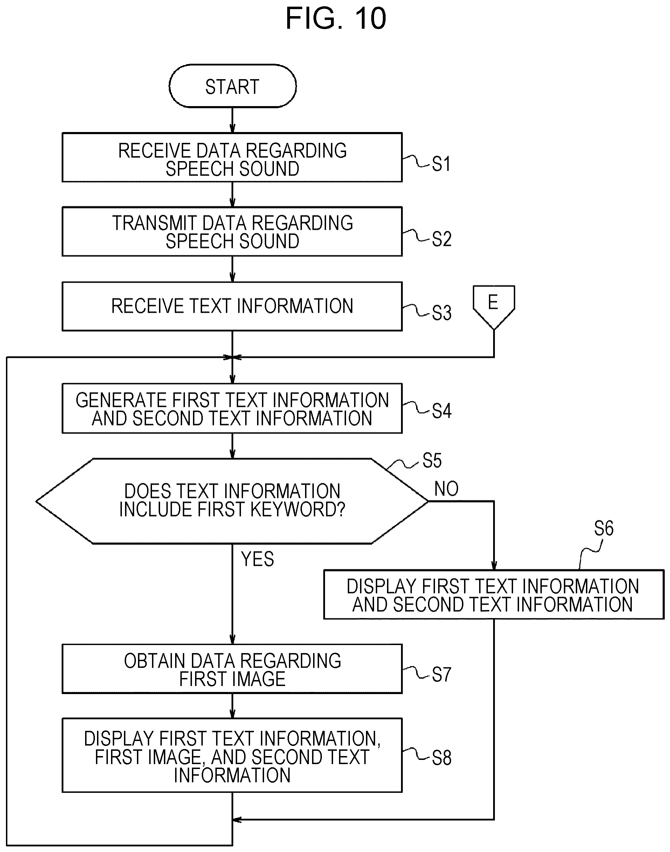

FIG. 10 is a flowchart illustrating a procedure of a control process in the first display mode. The control process illustrated in FIG. 10 corresponds to an example of a control method according to the present embodiment. For example, the controller 53 receives an input indicating an instruction to display a text on the transparent screen 11 from the input apparatus 40 using the communicator 51, and starts processing in step S1 illustrated in FIG. 10. This input is input by the second user U2 to the input apparatus 40. When the processing in step S1 starts, the operation mode of the display system 1 is the first display mode.

The controller 53 receives, from the microphone 30 using the communicator 51, data regarding a speech sound collected by the microphone 30 (step S1). The controller 53 transmits the data regarding a speech sound received through the processing in step S1 to the server 3 via the network 2 using the communicator 51 (step S2). The controller 53 receives text information obtained through conversion based on speech recognition from the server 3 via the network 2 using the communicator 51 (step S3). The controller 53 repeatedly performs the processing in steps S1 to S3 in parallel with processing in step S4 and subsequent steps.

The controller 53 generates first text information and second text information on the basis of the text information received from the server 3 through the processing in step S3 (step S4).

The controller 53 refers to the first database 52D1, and determines whether the text information received through the processing in step S3 includes a first keyword (step S5). If determining that the received text information does not include a first keyword (step S5: NO), the controller 53 proceeds to processing in step S6. If determining that the received text information includes a first keyword (step S5: YES), on the other hand, the controller 53 proceeds to processing in step S7.

In the processing in step S6, the controller 53 displays the first text information generated through the processing in step S4 in the first region A11 of the first display region A1 and the second text information generated through the processing in step S4 in the second display region A2.

In the processing in step S7, the controller 53 obtains, from the first database 52D1, data regarding a first image associated with the first keyword included in the received text information.

In the processing in step S8, the controller 53 displays the first text information generated through the processing in step S4 in the first region A11 of the first display region A1 and the second text information generated through the processing in step S4 in the second display region A2. The controller 53 displays the first image obtained through the processing in step S7 in the second region A12 of the first display region A1.

After the processing in step S7 or step S8, the controller 53 returns to the processing in step S4.

In the processing in steps S1 to S8, when the controller 53 receives an input indicating a stop of the display of a text on the transparent screen 11 from the input apparatus 40 using the communicator 51, for example, the controller 53 ends the control process illustrated in FIG. 10. This input is input by the second user U2 to the input apparatus 40.

### (Operation in Second Display Mode)

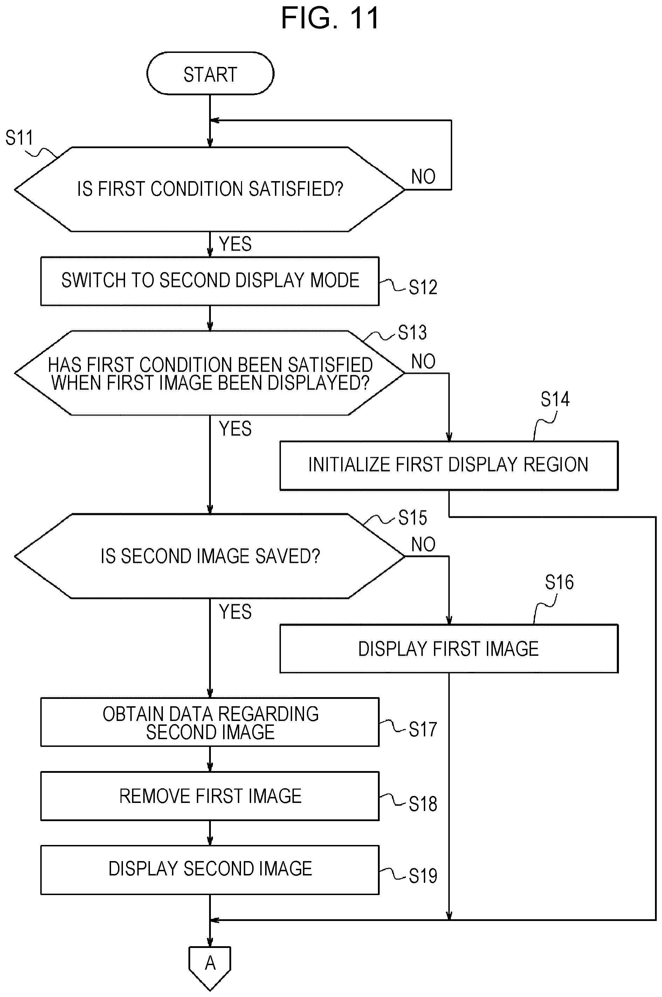

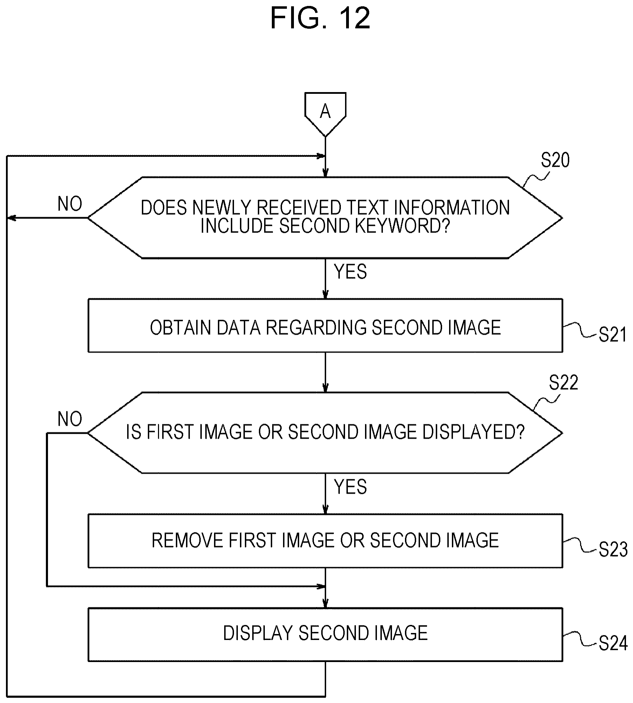

FIGs. 11 and 12 are flowcharts illustrating a control process in the second display mode. The control process illustrated in FIGs. 11 and 12 corresponds to an example of the control method according to the present embodiment. For example, the controller 53 performs processing in step S11 illustrated in FIG. 11 in parallel with the processing in steps S1 to S8 illustrated in FIG. 10. The controller 53 repeatedly performs the processing in steps S1 to S3 in parallel with the processing in step S11 and subsequent steps.

The controller 53 determines whether the first condition is satisfied (step 11). If determining that the first condition is satisfied (step S11: YES), the controller 53 proceeds to step S12. If determining that the first condition is not satisfied (step S11: NO), on the other hand, the controller 53 performs the processing in step S11 again.

In processing in step S12, the controller 53 switches the operation mode of the display system 1 from the first display mode to the second display mode.

In processing in step S13, the controller 53 determines whether the first condition has been satisfied when a first image is displayed in the second region A12. For example, if the processing in step S8 illustrated in FIG. 10 has been performed before the processing in step S11, the first condition can be satisfied when a first image is displayed.

If determining that the first condition has been satisfied when a first image is not displayed in the second region A12 (step S13: NO), the controller 53 initializes the first display region A1 (step S14). If determining that the first condition has been satisfied when a first image is displayed in the second region A12 (step S13: YES), on the other hand, the controller 53 proceeds to processing in step S15.

In the processing in step S15, the controller 53 refers to the second database 52D2, and determines whether a second image associated with a second keyword that is the same as a first keyword associated with the displayed first image is saved. If determining that the second image is saved (step S15: YES), the controller 53 proceeds to processing in step S17. If determining that the second image is not saved (step S15: NO), on the other hand, the controller 53 proceeds to processing in step S16.

In the processing in step S16, the controller 53 displays the first image displayed in the second region A12 in the third region A13. As illustrated in FIG. 7, for example, the controller 53 displays a first image 71 in the third region A13.

In the processing in step S17, the controller 53 obtains, from the second database 52D2, data regarding the second image associated with the second keyword that is the same as the first keyword associated with the first image displayed in the second region A12. The controller 53 removes the first image displayed in the second region A12 (step S18), and displays the second image obtained through the processing in step S17 in the third region A13 (step S19). As illustrated in FIG. 6, for example, the controller 53 displays a second image 70 in the third region A13.

After performing the processing in step S14, step S16, or step S19, the controller 53 proceeds to processing in step S20 illustrated in FIG. 12.

After newly performing the processing in step S3, that is, after newly receiving text information from the server 3, the controller 53 performs the processing in step S20. The controller 53 refers to the second database 52D2, and determines whether the text information newly received from the server 3 includes a second keyword (step S20). If determining that the newly received text information includes a second keyword (step S20: YES), the controller 53 proceeds to processing in step S21. If determining that the newly received text information does not include a second keyword (step S20: NO), on the other hand, the controller 53 performs the processing in step S20 again.

In the processing in step S21, the controller 53 obtains, from the second database 52D2, data regarding a second image associated with the second keyword included in the newly received text information.

In processing in step S22, the controller 53 determines whether a first image or a second image is displayed in the third region A13. If the processing in step S16 or step S19 has been performed before the processing in step S22, a first image or a second image is displayed in the third region A13 of the first display region A1. If the processing in step S14 has been performed before the processing in step S22, neither a first image nor a second image is displayed in the third region A13 of the first display region A1.

If determining that a first image or a second image is displayed in the third region A13 (step S22: YES), the controller 53 proceeds to processing in step S23. If determining that neither a first image nor a second image is displayed in the third region A13 of the first display region A1 (step S22: NO), on the other hand, the controller 53 proceeds to processing in step S24.

In the processing in step S23, the controller 53 removes the displayed first image or second image from the third region A13. In the processing in step S24, the controller 53 displays the second image obtained through the processing in step S21 in the third region A13.

In the processing in steps S11 to S24, for example, when the controller 53 receives an input indicating a stop of the display of a text on the transparent screen 11 from the input apparatus 40 using the communicator 51, the controller 53 ends the control process illustrated in FIGs. 11 and 12. This input is input by the second user U2 to the input apparatus 40.

### (Operation in Other Example of Second Display Mode)

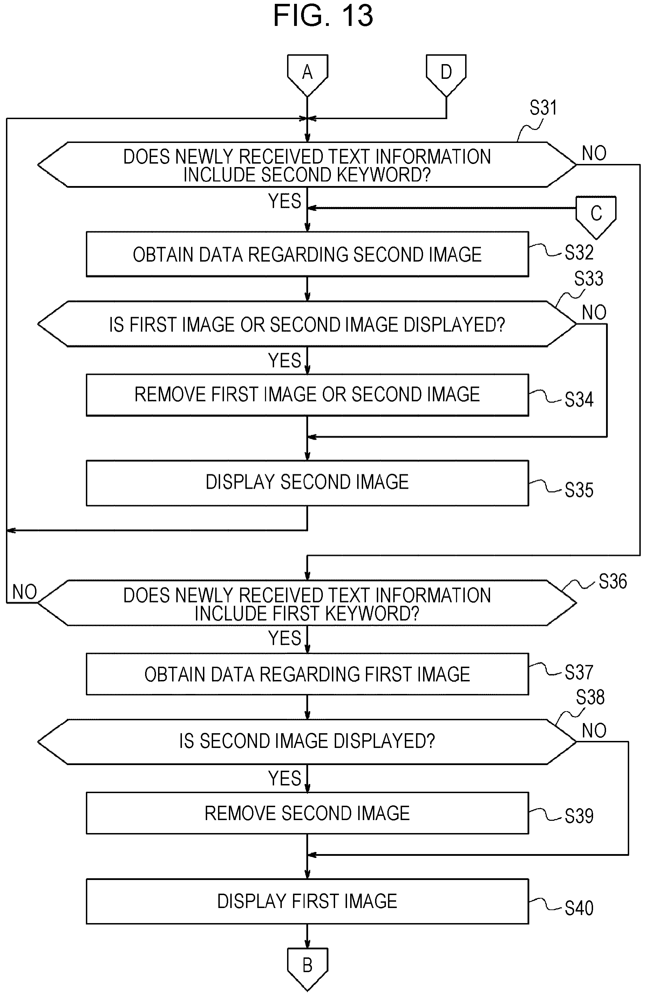

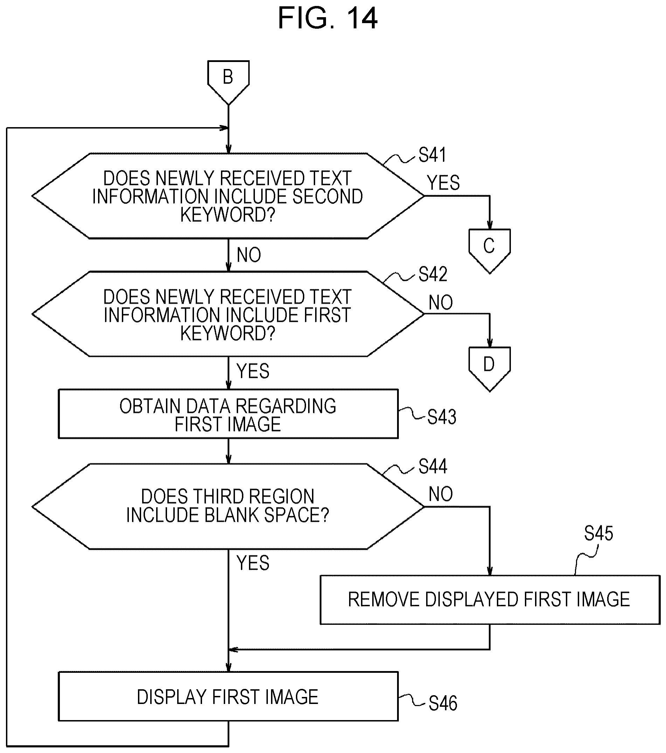

FIGs. 13 and 14 are flowcharts illustrating a procedure of a control process in the other example of the second display mode. The control process illustrated in FIGs. 13 and 14 corresponds to an example of the control method according to the present embodiment. For example, after performing the processing in step S19 illustrated in FIG. 11, the controller 53 starts processing in step S31 illustrated in FIG. 13. The controller 53 repeatedly performs the processing in steps S1 to S3 illustrated in FIG. 10 in parallel with the processing in step S31 and subsequent steps.

After newly performing the processing in step S3, that is, after newly receiving text information from the server 3, the controller 53 performs the processing in step S31.

In the processing in step S31, the controller 53 refers to the second database 52D2, and determines whether the text information newly received from the server 3 includes a second keyword. If determining that the newly received text information includes a second keyword (step S31: YES), the controller 53 proceeds to processing in step S32. If determining that the newly received text information does not include a second keyword (step S31: NO), on the other hand, the controller 53 proceeds to processing in step S36.

The controller 53 performs processing in steps S32, S33, S34, and S35 as with or similarly to the processing in steps S21, S22, S23, and S24 illustrated in FIG. 12. After performing the processing in step S35, the controller 53 returns to the processing in step S31.

In the processing in step S36, the controller 53 refers to the first database 52D1, and determines whether the text information newly received from the server 3 includes a first keyword. The controller 53 performs the processing in step S36 on text information that is the same as the text information on which the processing in step S31 has been performed. If determining that the newly received text information includes a first keyword (step S36: YES), the controller 53 proceeds to processing in step S37. If determining that the newly received text information does not include a first keyword (step S36: NO), on the other hand, the controller 53 returns to the processing in step S31.

In the processing in step S37, the controller 53 obtains, from the first database 52D1, data regarding a first image associated with the first keyword included in the newly received text information.

In processing in step S38, the controller 53 determines whether a second image is displayed in the third region A13. If determining that a second image is displayed in the third region A13 (step S38: YES), the controller 53 removes the second image from the third region A13 (step S39), and proceeds to processing in step S40. If determining that a second image is not displayed in the third region A13 (step S38: NO), on the other hand, the controller 53 proceeds to processing in step S40.

In the processing in step S40, the controller 53 displays the first image obtained through the processing in step S37 in the third region A13.

If the text information newly received from the server 3 does not include a second keyword but includes a first keyword as a result of the processing in steps S31 to S40, a new first image associated with the first keyword is displayed in the third region A13.

After performing the processing in step S40, the controller 53 proceeds to processing in step S41 illustrated in FIG. 14.

After newly performing the processing in step S3, that is, after newly receiving text information from the server 3, the controller 53 performs the processing in step S41.

In the processing in step S41, the controller 53 refers to the second database 52D2, and determines whether the text information newly received from the server 3 includes a second keyword. If determining that the newly received text information includes a second keyword (step S41: YES), the controller 53 proceeds to the processing in step S32 illustrated in FIG. 13. If determining that the newly received text information does not include a second keyword (step S41: NO), on the other hand, the controller 53 proceeds to processing in step S42.

In the processing in step S42, the controller 53 refers to the first database 52D1, and determines whether the text information newly received from the server 3 includes a first keyword. The controller 53 performs the processing in step S42 on text information that is the same as the text information on which the processing in step S41 has been performed. If determining that the newly received text information includes a first keyword (step S42: YES), the controller 53 proceeds to processing in step S43. If determining that the newly received text information does not include a first keyword (step S42: NO), on the other hand, the controller 53 returns to the processing in step S31 illustrated in FIG. 13.

In the processing in step S43, the controller 53 obtains, from the first database 52D1, data regarding a first image associated with the first keyword included in the newly received text information.

In processing in step S44, the controller 53 determines whether the third region A13 includes a blank space. If determining that the third region A13 includes a blank space (step S44: YES), the controller 53 proceeds to processing in step S46. If determining that the third region A13 does not include a blank space (step S44: NO), the controller 53 removes one of first images displayed in the third region A13 (step S45), and proceeds to processing in step S46.

In the processing in step S46, the controller 53 displays the first image obtained through the processing in step S43 in the third region A13. After performing the processing in step S46, the controller 53 returns to the processing in step S41.

As described above, if determining that the third region A13 includes a blank space (step S44: YES), the controller 53 displays a new first image in the third region A13 along with displayed first images through the processing in step S46. As illustrated in FIG. 8, for example, the controller 53 displays a first image 72 along with displayed first images 71.

As described above, if determining that the third region A13 does not include a blank space (step S44: NO), the controller 53 removes one of displayed first images and displays a new first image in the third region A13 through the processing in steps S45 and S46. With the configuration illustrated in FIG. 9, for example, the controller 53 removes the first image 71 among the displayed first images 71 to 73, and displays the new first image in the third region A13.

In the processing in steps S31 to S46, for example, the controller 53 receives an input indicating a stop of the display of a text on the transparent screen 11 from the input apparatus 40 using the communicator 51, and ends the control process illustrated in FIGs. 11 and 12. This input is input by the second user U2 to the input apparatus 40.

### (Operation in Processing for Removing Image)

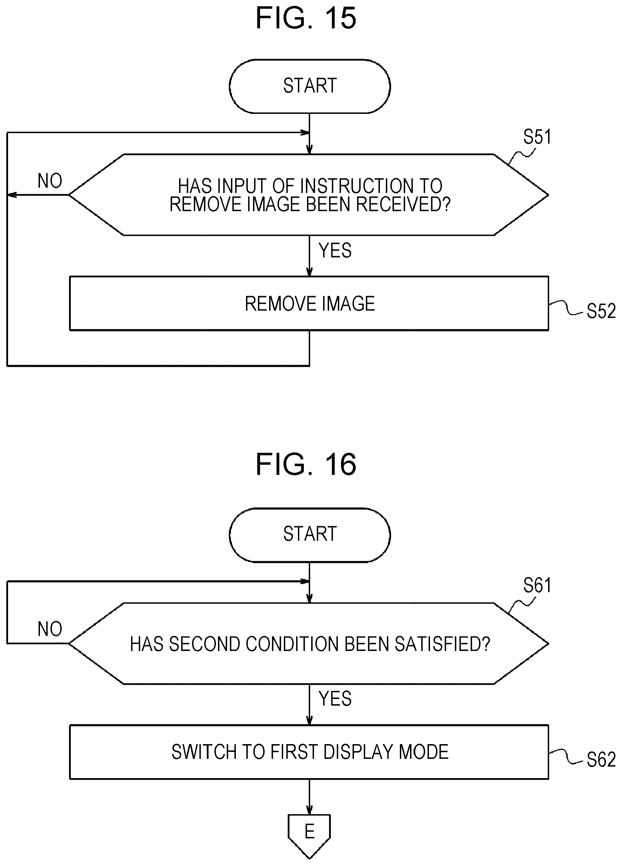

FIG. 15 is a flowchart illustrating a procedure of a process for removing an image. The process for removing an image illustrated in FIG. 15 corresponds to an example of the control method according to the present embodiment. For example, the controller 53 may perform processing in step S51 illustrated in FIG. 15 in parallel with the processing in steps S1 to S8 illustrated in FIG. 10, the processing in steps S11 to S24 illustrated in FIGs. 11 and 12, or the processing in steps S31 to S46 illustrated in FIGs. 13 and 14.

The controller 53 determines whether an input of an instruction to remove an image has been received from the second user U2 (step S51). If determining that an input of an instruction to remove an image has not been received from the second user U2 (step S51: NO), the controller 53 performs the processing in step S51 again. If determining that an input of an instruction to remove an image has been received (step S51: YES), on the other hand, the controller 53 removes the image from the first display region A1 in accordance with the input (step S52). After performing the processing in step S52, the controller 53 returns to the processing in step S51.

### (Operation in Process for Switching to First Display Mode)

FIG. 16 is a flowchart illustrating a procedure of a process for switching to the first display mode. The process for switching to the first display mode illustrated in FIG. 16 corresponds to an example of the control method according to the present embodiment. For example, the controller 53 may perform processing in step S61 illustrated in FIG. 16 in parallel with the processing in steps S11 to S24 illustrated in FIGs. 11 and 12 or the processing in steps S31 to S46 illustrated in FIGs. 13 and 14.

The controller 53 determines whether the second condition has been satisfied (step S61). If determining that the second condition has been satisfied (step S61: YES), the controller 53 proceeds to processing in step S62. If determining that the second condition has not been satisfied (step S61: NO), on the other hand, the controller 53 performs the processing in step S61 again.

In the processing in step S62, the controller 53 switches the operation mode of the display system 1 from the second display mode to the first display mode. After performing the processing in step S62, the controller 53 proceeds to the processing in step S4 illustrated in FIG. 10. In the processing in step S4, the controller 53 generates first text information and second text information from text information that has been obtained. After performing the processing in step S4, the controller 53 determines whether the text information on which the processing in step S4 has been performed includes a first keyword (step S5).

As described above, in the electronic device 50 according to the present embodiment, if the first condition is satisfied when the operation mode of the display system 1 is the first display mode, the controller 53 switches the operation mode of the display system 1 from the first display mode to the second display mode. In the second display mode, the controller 53 displays an image in the first display region A1 as the display of the display system 1 in a display manner different from that in the first display mode. Since manners of displaying images are different between the first display mode and the second display mode, the operation mode of the display system 1 can be switched to the first display mode or the second display mode in accordance with a situation of communication between the first user U1 and the second user U2. According to the present embodiment, therefore, the technique for displaying an image on the display can be improved.

In the present embodiment, the first condition may be a condition that a predetermined input has been received. In this case, as described above, the second user U2 may input an instruction to switch to the second display mode to the input apparatus 40 as the predetermined input. With this configuration, the operation mode of the display system 1 can be switched to the second display mode at a timing convenient for the second user U2. Convenience, therefore, can be improved for the second user U2.

In the present embodiment, the first condition may be a condition that the status information regarding the first user U1 indicates a desire to use the second display mode. With this configuration, convenience can be improved for the first user U1.

In the present embodiment, the first display mode may be a mode in which text information and images can be displayed. The first display mode may be a mode in which first text information is displayed in the first region A11 and a first image is displayed in the second region A12 as illustrated in FIG. 3. Depending on the communication between the first user U1 and the second user U2, both text information and images are preferably displayed. The first display mode in which text information and images are displayed, therefore, is convenient depending on a situation of communication between the first user U1 and the second user U2.

In the present embodiment, the controller 53 may generate first text information in the first display mode such that a character string included in text information received from the server 3 is displayed in a correct orientation when viewed from the first user U1. For example, the controller 53 may generate the first text information 60 illustrated in FIG. 3. With this configuration, convenience can be improved for the first user U1.

In the present embodiment, if the first condition is satisfied when the first image is displayed, the controller 53 may determine whether a second image associated with a second keyword that is the same as a first keyword associated with the displayed first image is saved. If determining that the second image is not saved, the controller 53 may display the first image in the second display mode. By displaying the first image when the second image is not saved, the first display region A1 can be used without waste.

In the present embodiment, in the other example of the second display mode, if newly obtained text information does not include a second keyword but includes a first keyword, the controller 53 may display a new first image associated with the first keyword included in the newly obtained text information. By displaying a new first image if newly obtained text information does not include a second keyword but includes a first keyword, the first display region A1 can be used without waste.

In the present embodiment, in the other example of the second display mode, the controller 53 may determine, before displaying a new first image, whether the third region A13 as the display includes a blank space. If determining that the third region A13 includes a blank space, the controller 53 may display the new first image in the third region A13 along with displayed first images. With this configuration, the first display region A1 can be used without waste.

In the present embodiment, in the other example of the second display mode, if determining that the third region A13 as the display does not include a blank space, the controller 53 may remove one of displayed first images, and display a new first image in the third region A13. By removing one of displayed first images and displaying a new first image when the third region A13 does not include a blank space, the new first image based on latest communication between the first user U1 and the second user U2 is displayed in the third region A13. With this configuration, convenience can be improved for the first user U1 and the second user U2.

In the present embodiment, in the other example of the second display mode, when removing one of displayed first images after determining that the third region A13 does not include a blank space, the controller 53 may remove a first image displayed the longest time ago among the displayed first images. Importance of the first image displayed the longest time ago among the displayed first images in communication between the first user U1 and the second user U2 might have decreased. By removing the first image displayed the longest time ago, a possibility of undermining the convenience for the first user U1 and the second user U2 is reduced.

In the present embodiment, in the other example of the second display mode, the controller 53 may determine whether the third region A13 includes a blank space by calculating the maximum value of the number of first images that can be displayed in the third region A13 as the display. With this configuration, the controller 53 can more easily determine whether the third region A13 includes a blank space.

In the present embodiment, if the second condition is satisfied in the second display mode, the controller 53 may switch the operation mode of the display system 1 from the second display mode to the first display mode. With this configuration, the operation mode of the display system 1 can be switched to the first display mode in accordance with a situation of communication between the first user U1 and the second user U2.

Although the present disclosure has been described on the basis of the drawings and the examples, note that those skilled in the art can easily make various alterations and corrections on the basis of the present disclosure. Note, therefore, that such alterations and corrections are included in the scope of the present disclosure. For example, the functions of the various functional units or the like can be rearranged without causing a logical contradiction. The plurality of functional units or the like may be combined together or further divided. Each of the above-described embodiments of the present disclosure is not limited to being implemented exactly as described in the embodiment, and can be implemented by appropriately combining various features or by omitting some features. That is, those skilled in the art can make various alterations and corrections on the basis of the present disclosure. Such alterations and corrections are also included in the scope of the present disclosure. For example, in each embodiment, each functional unit, each means, or each step may be added to another embodiment or replaced with a functional unit, means, or a step from another embodiment, insofar as no logical contradiction is caused. In each embodiment, a plurality of functional units, means, or steps can be combined together or further divided. Each of the above-described embodiments of the present disclosure is not limited to being implemented exactly as described in the embodiment, and may be implemented by appropriately combining various features or by omitting some features.

For example, in the above-described embodiment, the server 3 performs the speech recognition processing. Any apparatus other than the server 3, however, may perform the speech recognition processing, instead. In an example, the electronic device 50 perform the speech recognition processing.

For example, an embodiment is possible in which a general-purpose computer is caused to function as the electronic device 50 according to the above-described embodiment. Specifically, a program in which processing for achieving each function of the electronic device 50 according to the above-described embodiment is described is stored in a memory of the general-purpose computer, and a processor reads and executes the program. The present disclosure, therefore, can be achieved as a program executable by a processor a non-transitory computer-readable medium storing the program.

For example, the components and the functional blocks included in each embodiment of the present disclosure may be appropriately arranged in the same piece of hardware or different pieces of hardware. The microphone 30 according to each embodiment of the present disclosure may be included in the same piece of hardware as for the electronic device 50 or the projector 20. The input apparatus 40 according to each embodiment of the present disclosure may be included in the same piece of hardware as for the electronic device 50 or the projector 20. A part or the entirety of the communicator 51, the storage 52, and the controller 53 according to each embodiment of the present disclosure may be included in the projector 20.

For example, the display in the present disclosure is not limited to a configuration including a transparent screen. The display may be, for example, one including a transparent organic EL display (OLED: Organic Light Emitting Diode) in which light-emitting elements are arranged inside a transparent substrate.

For example, in the above-described embodiment, the first user U1 holds the IC card over the communication module of the communicator 51. The first user U1, however, need not hold the IC card over the communication module of the communicator 51 depending on a communication distance between the IC card and the communicator 51 in the short-range wireless communication. In this case, when the distance between the IC card of the first user U1 and the communicator 51 becomes a distance with which the short-range wireless communication can be performed, the controller 53 may receive, using the communicator 15, information indicating a desire to use the second display mode written in the IC card.

In an embodiment, (1) a program causes a display control apparatus to perform a process including:
obtaining text information obtained through conversion based on speech recognition;
operating in a first display mode, in which an image associated with a keyword included in the text information is displayed on a display located between a first user and a second user;
switching from the first display mode to a second display mode if a first condition is satisfied in the first display mode; and
displaying, in the second display mode, the image on the display in a display manner different from a display manner in the first display mode.

(2) In the program according to (1),
the first condition may be a condition that a predetermined input has been received.

(3) In the program according to (1) or (2),
the first condition may be a condition that status information regarding the first user indicates a desire to use the second display mode.

(4) In the program according to any of (1) to (3),
the first display mode may be a mode in which the text information and the image are displayable.

(5) In the program according to any of (1) to (4),
the second display mode may be a mode in which more images or a larger image than in the first display mode is displayable.

(6) In the program according to any of (1) to (5),
the process may further include displaying, in the first display mode as the displaying the image, a first image associated with a first keyword included in the text information.

(7) In the program according to any of (1) to (6),
the process may include, in the first display mode as displaying the text information, displaying first text information, and
the first text information may be generated and a character string included in the text information may be displayed in a correct orientation when viewed from the first user.

(8) In the program according to any of (1) to (7),
the process may include displaying, in the second display mode as the displaying the image, a second image associated with a second keyword included in the text information.

(9) In the program according to any of (1) to (8),
the process may include:
determining, if the first condition is satisfied when the first image is displayed, whether a second image associated with a second keyword that is same as the first keyword is saved; and
displaying, if determining that the second image is saved, the second image in the second display mode as the displaying the image.

(10) In the program according to any of (1) to (9),
the process may include displaying, if determining that the second image is not saved, the first image in the second display mode as the displaying the image.

(11) In the program according to any of (1) to (10),
the process may include preferentially displaying, if newly obtaining the text information in the second display mode, a new second image associated with a second keyword included in the newly obtained text information.

(12) In the program according to any of (1) to (11),
the process may include displaying, if the newly obtained text information does not include a second keyword but includes a first keyword in the second display mode, a new first image associated with the first keyword included in the newly obtained text information.

(13) In the program according to any of (1) to (12),
the process may include:
determining, before displaying the new first image, whether the display includes a blank space; and
displaying, if determining that the display includes a blank space, the new first image on the display along with displayed first images.

(14) In the program according to any of (1) to (13),
the process may include:
determining, before displaying the new first image, whether the display includes a blank space; and
removing, if determining that the display does not include a blank space, one of the displayed first images and displaying the new first image on the display.

(15) In the program according to any of (1) to (14),
the process may include removing, as the removing one of the displayed first images, a first image displayed the longest time ago among the displayed first images.

(16) In the program according to any of (1) to (15),
the process may include:
determining whether the display includes a blank space by calculating a maximum value of a number of the first images displayable on the display; and
calculating the maximum value of the number of the first images displayable on the display on a basis of an aspect ratio of the first images and a size of the display in a horizontal direction and a size in a vertical direction.

(17) In the program according to any of (1) to (16),
a size of the first image in a vertical direction may be larger than a size of the first image in the horizontal direction, and
a size of the second image in the horizontal direction may be larger than a size of the second image in the vertical direction.

(18) In the program according to any of (1) to (17),
the process may include switching from the second display mode to the first display mode if a second condition is satisfied in the second display mode.

In an embodiment, (19) a display control apparatus includes:
a controller that obtains text information obtained through conversion based on speech recognition, that operates in a first display mode, in which an image associated with a keyword included in the text information is displayed on a display located between a first user and a second user, and that switches from the first display mode to a second display mode if a first condition is satisfied in the first display mode,
in which the controller displays, in the second display mode, the image on the display in a display manner different from a display manner in the first display mode.

In an embodiment, (20) a control method includes:
obtaining text information obtained through conversion based on speech recognition;
operating in a first display mode, in which an image associated with a keyword included in the text information is displayed on a display located between a first user and a second user;
switching from the first display mode to a second display mode if a first condition is satisfied in the first display mode; and
displaying, in the second display mode, the image on the display in a display manner different from a display manner in the first display mode.

In the present disclosure, terms such as "first" and "second" are identifiers for distinguishing the corresponding components. The components distinguished with the terms such as "first" and "second" in the present disclosure may exchange the numbers thereof. For example, the first user may exchange "first", which is an identifier, for "second" with the second user. The identifiers are simultaneously exchanged. Even after the exchange of the identifiers, the components are still distinguished from each other. Identifiers may be removed. Components from which identifiers have been removed are distinguished from each other by reference numerals. The identifiers such as "first" and "second" in the present disclosure are not intended to be used as a sole basis for interpretation of order of the components or presence of an identifier with a smaller number.

### REFERENCE SIGNS

- 1: display system
- 2: network
- 3: server
- 10: base
- 10a, 10B: surface
- 11: transparent screen
- 12: screen section
- 13: light-blocking section
- 20: projector
- 30: microphone
- 40: input apparatus
- 50: electronic device
- 51: communicator
- 52: storage
- 52D1: first database
- 52D2: second database
- 53: controller
- 60: first text information
- 61: second text information
- 70: second image
- 62, 71, 72, 73: first image
- A1: first display region
- A11: first region
- A12: second region
- A13: third region
- A2: second display region
- U1: first user
- U2: second user

## Claims

1. A program causing a display control apparatus to perform a process comprising:
obtaining text information obtained through conversion based on speech recognition;
operating in a first display mode, in which an image associated with a keyword included in the text information is displayed on a display located between a first user and a second user;
switching from the first display mode to a second display mode if a first condition is satisfied in the first display mode; and
displaying, in the second display mode, the image on the display in a display manner different from a display manner in the first display mode.

2. The program according to claim 1,
wherein the first condition is a condition that a predetermined input has been received.

3. The program according to claim 1,
wherein the first condition is a condition that status information regarding the first user indicates a desire to use the second display mode.

4. The program according to any of claims 1 to 3,
wherein the first display mode is a mode in which the text information and the image are displayable.

5. The program according to any of claims 1 to 4,
wherein the second display mode is a mode in which more images or a larger image than in the first display mode is displayable.

6. The program according to any of claims 1 to 5,
wherein the process further includes displaying, in the first display mode as the displaying the image, a first image associated with a first keyword included in the text information.

7. The program according to any of claims 1 to 6,
wherein the process includes, in the first display mode as displaying the text information, displaying first text information, and
wherein the first text information is generated and a character string included in the text information is displayed in a correct orientation when viewed from the first user.

8. The program according to any of claims 1 to 7,
wherein the process includes displaying, in the second display mode as the displaying the image, a second image associated with a second keyword included in the text information.

9. The program according to claim 6,
wherein the process includes:
determining, if the first condition is satisfied when the first image is displayed, whether a second image associated with a second keyword that is same as the first keyword is saved; and
displaying, if determining that the second image is saved, the second image in the second display mode as the displaying the image.

10. The program according to claim 9,
wherein the process includes displaying, if determining that the second image is not saved, the first image in the second display mode as the displaying the image.

11. The program according to claim 10,
wherein the process includes preferentially displaying, if newly obtaining the text information in the second display mode, a new second image associated with a second keyword included in the newly obtained text information.

12. The program according to claim 11,
wherein the process includes displaying, if the newly obtained text information does not include a second keyword but includes a first keyword in the second display mode, a new first image associated with the first keyword included in the newly obtained text information.

13. The program according to claim 12,
wherein the process includes:
determining, before displaying the new first image, whether the display includes a blank space; and
displaying, if determining that the display includes a blank space, the new first image on the display along with displayed first images.

14. The program according to claim 12,
wherein the process includes:
determining, before displaying the new first image, whether the display includes a blank space; and
removing, if determining that the display does not include a blank space, one of the displayed first images and displaying the new first image on the display.

15. The program according to claim 14,
wherein the process includes removing, as the removing one of the displayed first images, a first image displayed the longest time ago among the displayed first images.

16. The program according to any of claims 13 to 15,
wherein the process includes:
determining whether the display includes a blank space by calculating a maximum value of a number of the first images displayable on the display; and
calculating the maximum value of the number of the first images displayable on the display on a basis of an aspect ratio of the first images and a size of the display in a horizontal direction and a size in a vertical direction.

17. The program according to any of claims 9 to 15,
wherein a size of the first image in a vertical direction is larger than a size of the first image in the horizontal direction, and
wherein a size of the second image in the horizontal direction is larger than a size of the second image in the vertical direction.

18. The program according to any of claims 1 to 17,
wherein the process includes switching from the second display mode to the first display mode if a second condition is satisfied in the second display mode.

19. A display control apparatus comprising:
a controller that obtains text information obtained through conversion based on speech recognition, that operates in a first display mode, in which an image associated with a keyword included in the text information is displayed on a display located between a first user and a second user, and that switches from the first display mode to a second display mode if a first condition is satisfied in the first display mode,
wherein the controller displays, in the second display mode, the image on the display in a display manner different from a display manner in the first display mode.

20. A control method comprising:
obtaining text information obtained through conversion based on speech recognition;
operating in a first display mode, in which an image associated with a keyword included in the text information is displayed on a display located between a first user and a second user;
switching from the first display mode to a second display mode if a first condition is satisfied in the first display mode; and
displaying, in the second display mode, the image on the display in a display manner different from a display manner in the first display mode.
